# EUROPÄISCHE PATENTSCHRIFT

(11) **EP 2 087 252 B1**
(45) Veröffentlichungstag und Bekanntmachung des Hinweises auf die Patenterteilung: **20.06.2012**
(21) Anmeldenummer: 07846923.6
(22) Anmeldetag: 30.11.2007
(51) Int. Cl.: F16D 25/06, F16D 25/12

(54) **REIBUNGSKUPPLUNG FÜR DEN ANTRIEBSSTRANG EINES FAHRZEUGS**
FRICTION CLUTCH FOR THE DRIVETRAIN OF A MOTOR VEHICLE
EMBRAYAGE À FRICTION POUR LA CHAÎNE CINÉMATIQUE D'UN VÉHICULE

(30) Priorität: 08.12.2006 DE 102006057893
(43) Veröffentlichungstag der Anmeldung: 12.08.2009
(73) Patentinhaber: ZF Friedrichshafen AG, 88038 Friedrichshafen (DE)
(72) Erfinder: SUDAU, Jörg, 97464 Niederwerrn (DE)
(86) Internationale Anmeldenummer: PCT/EP2007/010398
(87) Internationale Veröffentlichungsnummer: WO 2008/067955

(56) Entgegenhaltungen:
- DE-A1- 4 239 289
- DE-A1- 10 125 628
- FR-A- 2 291 410
- US-A- 5 669 480
- US-A- 5 749 451

## Beschreibung

Die vorliegende Erfindung betrifft eine Reibungskupplung für den Antriebsstrang eines Fahrzeugs, umfassend eine mit einem Antriebsorgan zur gemeinsamen Drehung um eine Drehachse zu koppelnde und wenigstens teilweise bzw. zeitweise mit Fluid gefüllte oder füllbare Gehäuseanordnung, eine erste Gruppe von Reibelementen, welche vermittels eines ersten Reibelemententrägers mit der Gehäuseanordnung zur gemeinsamen Drehung um die Drehachse gekoppelt sind, eine zweite Gruppe von Reibelementen, welche durch ein Kolbenelement in Reibeingriff mit den Reibelementen der ersten Gruppe von Reibelementen bringbar sind und vermittels eines zweiten Reibelemententrägers mit einem Abtriebsorgan zur gemeinsamen Drehung um die Drehachse zu koppeln sind, wobei durch das Kolbenelement der Innenraum der Gehäuseanordnung in einen ersten Teilraum, welcher die beiden Gruppen von Reibelementen enthält, und einen zweiten Teilraum unterteilt ist, in welchem der Fluiddruck im Vergleich zum Fluiddruck im ersten Teilraum zu erhöhen ist, um zur Herstellung des Reibeingriff der Reibelemente der beiden Gruppen von Reibelementen eine das Kolbenelement beaufschlagende Einrückkraft zu erzeugen.

### Stand der Technik

Aus der US 5,749,451 A ist eine derartige, auch als nasslaufende Reibungskupplung bekannte Reibungskupplung für den Antriebsstrang eines Kraftfahrzeugs bekannt. Eine erste Gruppe von Reibelementen, auch als Lamellen bezeichnet, ist mit der Gehäuseanordnung drehfest verbunden, während eine zweite Gruppe von Reibelementen mit einer Nabe drehfest gekoppelt ist. Die beiden Gruppen von Reibelementen sind in einem ersten Teilraum der Gehäuseanordnung angeordnet, durch welchen Fluid leitbar ist, um die Reibelemente zu kühlen. In einem zwischen dem Kolbenelement und der Gehäuseanordnung gebildeten zweiten Teilraum kann der Fluiddruck erhöht werden, um das Kolbenelement gegen die Reibelemente zu pressen. Um beim Durchführen eines Betätigungsvorgangs, insbesondere eines Einrückvorgangs, durch definierte Erhöhung des Fluiddrucks und somit definierte Erhöhung der Einrückkraft den Einkuppelvorgang mit der gewünschten Charakteristik, ggf. auch dem gewünschten Schlupf, durchführen zu können, ist es vorteilhaft, den Fluiddruck im zweiten Teilraum und somit die Einrückkraft gegen eine definierte Gegenkraft, also eine auf das Kolbenelement einwirkende Rückstellkraft, zu erzeugen. Dies führt zu wesentlich präziseren Verstellungen des Kolbenelements. Hierzu ist es beispielsweise möglich, eine Rückstellfeder bereitzustellen, welche das Kolbenelement in Richtung von den Reibelementen weg beaufschlagt und gegen welche die durch Fluiddruckerhöhung im zweiten Teilraum erzeugte Einrückkraft wirkt.

Im Allgemeinen weist eine derartige Rückstellfeder eine mit zunehmender Belastung bzw. Kompression, was mit zunehmendem Einrücken einer derartigen Reibungskupplung auftritt, auch ansteigende Rückstellkraft auf. Tritt bei einer derartigen Reibungskupplung dann beispielsweise im Bereich der reibend miteinander in Wechselwirkung tretenden Reibelemente Verschleiß auf, so nimmt die axiale Dicke der durch die beiden Gruppen von Reibelementen gebildeten Baugruppe ab. Dies bedeutet, dass zum Erlangen eines definierten Einrückzustands bzw. eines bestimmten Kupplungsmoments das Kolbenelement nachgeführt werden muss. Dies bringt jedoch eine stärkere Belastung der Rückstellfeder mit sich, was bei mit der Belastung ansteigender Rückstellkraft dazu führt, dass mit auftretendem Verschleiß auch gegen sich ändernde Rückstellkräfte gearbeitet werden muss. Dies bedeutet, dass grundsätzlich das gesamte Betätigungssystem, also dasjenige System, welches den Fluiddruck zur Verschiebung des Kolbenelements erzeugt, so ausgelegt werden muss, dass auch gegen größere Rückstellkräfte gearbeitet werden kann, was jedoch dazu führt, dass insbesondere in mit geringerem Verschleiß behaftetem Zustand oder im Neuzustand eine an sich mögliche Druckauflösung bzw. auch ein höheres über die Kupplung zu übertragendes Drehmoment nicht genutzt werden kann.

Zwar verfügt die bekannte nasslaufende Reibungskupplung über eine Verschleißkompensationsanordnung, jedoch lässt deren Aufbau keine Vermeidung des vorgenannten Problems zu. Diese Verschleißkompensationsanordnung verfügt über eine Rückstellfederanordnung, die sich einerends am Kolbenelement und anderenends an einer Abstützbaugruppe abstützt. Die Abstützbaugruppe stützt sich ihrerseits gegenüber einer Hülse axial ab, die relativ zu einer Nabe der Gehäuseanordnung axial fest aufgenommen ist, und wird außerdem durch eine Sensorfederanordnung beaufschlagt, die sich anderenends an einem Vorspannhalteelement einer Vorspannhalteanordnung abstützt. Diese Vorspannhalteanordnung verfügt über ein kugelförmiges Nachstellelement, das federbelastet gegen eine keilförmige Führungsbahn gepresst wird, und dadurch die Vorspannhalteanordnung kraftschlüssig gegenüber der Hülse fixiert. Die Führungsbahn lässt zwar zu, dass der Kraftschluss der Vorspannhalteanordnung gegenüber der Hülse bei einer verschleißbedingten Nachführbewegung des Kolbenelements zwar kurzzeitig aufgehoben wird, sich jedoch bei der nachfolgenden Rückbewegung des Kolbenelementes unverzüglich wieder aufbaut. Dadurch wird der Ein- oder Ausrückweg des Kolbenelementes zwar konstant gehalten, jedoch bewirkt jeder Nachstellvorgang eine weitere Annäherung des Kolbenelementes an die Abstützbaugruppe, und damit eine Steigerung der Vorspannung an Rückstellfederanordnung und Sensorfederanordnung. Hierdurch wird die zum Einrücken des Kolbenelements in Richtung zu den Reibelementen benötigte Kraft immer weiter erhöht.

Eine andere nasslaufende Reibungskupplung ist aus der DE 101 25 628 bekannt. Diese Reibungskupplung verfügt über keine Maßnahmen zur Kompensation verschleißbedingter Änderungen der Betriebsbedingungen.

Aus der DE 42 39 289 A1 ist eine herkömmliche, trockenlaufende Reibungskupplung für den Antriebsstrang eines Kraftfahrzeugs bekannt. Bei dieser wird eine Kupplungsscheibe mit ihren Reibbelägen zwischen einer Anpressplatte und einem Schwungrad geklemmt. Die Anpressplatte wird durch einen Kraftspeicher, im Allgemeinen eine Membranfeder, in Richtung Einrücken beaufschlagt. Der Kraftspeicher stützt sich dabei an der Anpressplatte einerseits und bezüglich des Kupplungsgehäuses andererseits ab. Tritt bei einer derartigen Reibungskupplung im Bereich der Reibbeläge Verschleiß auf, bedeutet dies, dass die Anpressplatte im Einrückzustand sich näher an das Schwungrad heranbewegt, was auch zu einer Entspannung der Membranfeder führt. Auf Grund der Federkennlinie einer derartigen Membranlinie bedeutet dies, dass die Betätigungsvorgänge, also auch die durch ein Ausrücksystem bereitstellenden Betätigungskräfte, sich über die Betriebslebensdauer einer derartigen Kupplung hinweg ändern. Um dem entgegenzutreten, kann eine Verschleißkompensationsanordnung vorgesehen sein, welche entweder im Abstützweg zwischen der Anpressplatte und dem Kraftspeicher oder im Abstützweg zwischen dem Kraftspeicher und dem Kupplungsgehäuse wirkt. Auf diese Art und Weise wird dafür gesorgt, dass unabhängig von einer verschleißbedingt auftretenden Verlagerung der Anpressplatte der Kraftspeicher grundsätzlich in einer gleich vorgespannten Einbaulage gehalten wird und mithin verschleißunabhängig eine gleich bleibende Einrückkraft erzeugt.

### Darstellung der Erfindung

Es ist die Aufgabe der vorliegenden Erfindung, eine nasslaufende Reibungskupplung so auszugestalten, dass sie eine verschleißunabhängige Betätigungscharakteristik mit zumindest im wesentlichen konstanter Betätigungskraft aufweist.

Erfindungsgemäß wird diese Aufgabe gelöst durch eine Reibungskupplung gemäß den Merkmalen des Anspruches 1.

Bei der erfindungsgemäßen Reibungskupplung ist dafür gesorgt, dass unabhängig davon, in welchem axialen Bereich das Kolbenelement sich bewegt, wenn es zum Einrücken bzw. Ausrücken verschoben wird, die durch die Rückstellanordnung erzeugte Rückstellkraft gleich bleibt. Dies bedeutet, dass auch dann, wenn bei vergleichsweise starkem Verschleiß der Reibelemente die axiale Dicke der durch die beiden Gruppen von Reibelementen gebildeten Baugruppen abgenommen hat und mithin das Kolbenelement beispielsweise im vollständig eingerückten Zustand in einem anderen axialen Bereich liegt, als dies im nicht verschleißbehafteten Neuzustand der Fall ist, gleichwohl durch die Rückstellanordnung eine Rückstellkraft auf das Kolbenelement erzeugt wird, wie sie auch im Neuzustand vorhanden ist. Dies bedeutet, dass völlig unabhängig vom Verschleißzustand das Kolbenelement immer gegen die gleiche Rückstellkraft verschoben werden kann und mithin keine Änderung der Regelcharakteristik beim Einrücken auftritt.

Die Rückstellanordnung umfasst eine Rückstellfederanordnung, welche bezüglich des Kolbenelements und bezüglich einer Sensorfederanordnung abgestützt ist und das Kolbenelement in Richtung Aufheben des Reibeingriffs der Reibelemente der beide Gruppen von Reibelementen beaufschlagt, wobei die Sensorfederanordnung bezüglich einer in Richtung der Drehachse im Wesentlichen nicht bewegbaren Abstützbaugruppe abgestützt ist.

An der Sensorfederanordnung kann ein Abstützbereich für die Rückstellfederanordnung vorgesehen sein, dessen Positionierung in Richtung der Drehachse in Abhängigkeit von einem Vorspannzustand der Sensorfederanordnung veränderbar ist. Dies bedeutet, dass dann, wenn Verschleiß auftritt, auch der Abstützbereich sich entsprechend verlagert und somit tatsächlich auf die Einbaulage der Rückstellfeder in der Reibungskupplung verschleißbedingt angepasst wird.

Um die bei zunehmendem Verschleiß auch auftretende Verlagerung des Kolbenelements und die damit zwangsweise auch auftretende stärkere Belastung der Rückstellfeder zu kompensieren, wird weiter vorgeschlagen, dass bei Veränderung des Vorspannzustandes der Vorspannfederanordnung in Richtung stärkere Vorspannung der Abstützbereich für die Rückstellfederanordnung sich in Richtung geringere Vorspannung der Rückstellfederanordnung verlagert. Beispielsweise kann vorgesehen sein, dass der Abstützbereich sich bezüglich des Kolbenelements in einer Richtung bewegt, in welche dieses sich zur Herstellung des Reibeingriffs der Reibelemente der beiden Gruppen von Reibelementen bewegt.

Die zum Verschieben des Abstützbereichs für die Rückstellfederanordnung erforderliche verschleißabhängige Veränderung der Vorspannung der Sensorfeder kann beispielsweise dadurch erzeugt werden, dass wenigstens ein Nachstellelement eine Rampenanordnung umfasst, mit welcher es bei Durchführung eines Nachstellvorgangs bezüglich eines weiteren Nachstellelements verlagerbar ist, so dass das das Vorspannhalteelement abstützende Nachstellelement sich in Richtung der Drehachse verlagert. Dabei ist es vorteilhaft, wenn das zur Durchführung eines Nachstellvorgangs sich verlagernde Nachstellelement in Richtung Nachstellbewegung vorgespannt ist.

Um bei der erfindungsgemäßen Reibungskupplung eine über einen großen Variationsbereich des Verschleißes gleich bleibende Charakteristik der Verschleißkompensation vorsehen zu können, wird vorgeschlagen, dass die Sensorfederanordnung zwischen einem Zustand minimaler Vorspannung und einem Zustand maximaler Vorspannung eine im Wesentlichen konstante Vorspannkraft bereitstellt. Dabei sollte die Vorspannkraft der Sensorfeder weniger als 20%, vorzugsweise weniger als 10%, variieren. Dies kann beispielsweise dadurch erreicht werden, dass die Sensorfederanordnung eine Tellerfeder umfasst.

### Kurze Beschreibung der Zeichnungen

Die vorliegende Erfindung wird nachfolgend mit Bezug auf die beiliegenden Zeichnungen detailliert beschrieben. Es zeigt:
- Fig. 1: eine Teil-Längsschnittansicht einer Reibungskupplung;
- Fig. 2: eine vergrößerte Ansicht der zur Rückstellkrafterzeugung eingesetzten Baugruppen;
- Fig. 3: eine Radial-Teilansicht zweier Nachstellelemente einer Verschleißkompensationsanordnung;
- Fig. 4: die durch verschiedene Federn über den Betätigungshub eines Kolbenelements erzeugte Federkraft;
- Fig. 5: eine der Fig. 1 entsprechende Ansicht einer alternativen Ausgestaltungsform.

### Bester Weg zur Ausführung der Erfindung

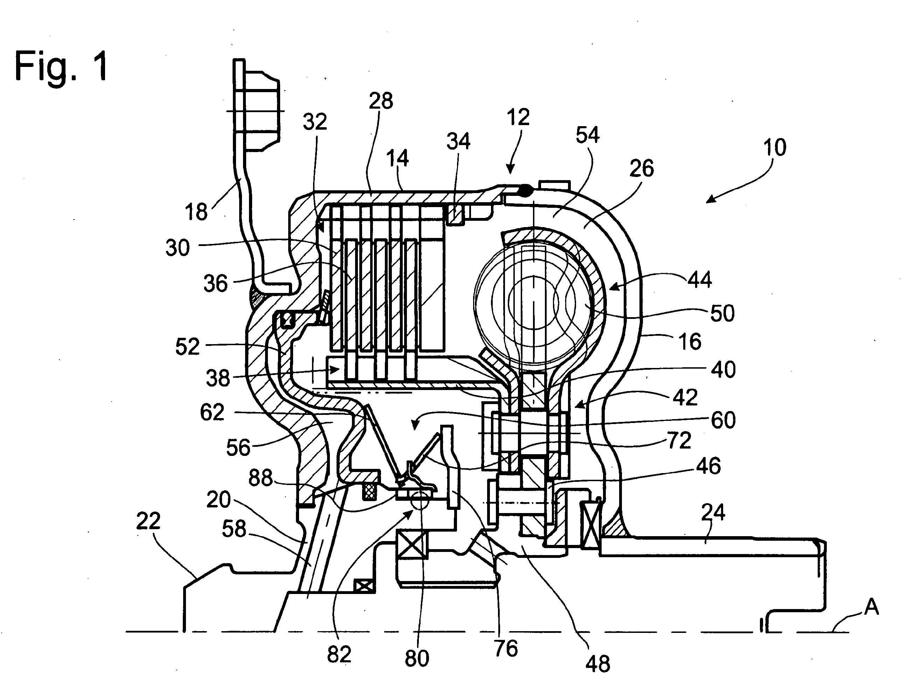

In Fig. 1 ist eine erfindungsgemäß aufgebaute nasslaufende Reibungskupplung allgemein mit 10 bezeichnet. Diese umfasst eine Gehäuseanordnung 12 mit zwei im Wesentlichen schalenartig ausgebildeten Gehäuseteilen 14 und 16. Das Gehäuseteil 14 ist über eine Kopplungsanordnung 18 und eine weiter nicht dargestellte Flexplatte oder dergleichen mit einer Antriebswelle, beispielsweise einer Kurbelwelle einer Brennkraftmaschine, drehfest zu koppeln. Radial innen ist mit dem Gehäuseteil 14, beispielsweise durch Verschweißung, eine Gehäusenabe 20 fest verbunden, welche mit einem Lagerzapfen 22 in der Antriebswelle gelagert werden kann. Das Gehäuseteil 16 ist radial innen mit einer Pumpennabe 24 beispielsweise durch Verschweißung fest verbunden. Diese kann in ein Getriebegehäuse eingreifen und eine Fluidpumpe antreiben, mit welcher Fluid in einen Innenraum 26 der Gehäuseanordnung 12 gefördert wird.

Das Gehäuseteil 14 bildet als integralen Bestandteil einen ersten Reibelemententräger 28, mit welchem die Reibelemente 30 einer ersten Gruppe 32 von Reibelementen, allgemein auch als Lamellen bezeichnet, drehfest, jedoch in geringem Ausmaß axial bewegbar gekoppelt sind. Ein Sicherungsring 34 bildet ein axiales Widerlager für die Reibelemente 30. Die Reibelemente 36 einer zweiten Gruppe von Reibelementen 38 sind mit einem zweiten Reibelemententräger 40 drehfest, bezüglich diesem jedoch in axialer Richtung, also in Richtung einer Drehachse A, bewegbar verbunden. Der zweite Reibelemententräger 40 ist mit der Primärseite 42 einer allgemein mit 44 bezeichneten Torsionsschwingungsdämpferanordnung verbunden. Eine Sekundärseite 46 der Torsionsschwingungsdämpferanordnung 44 ist über eine Abtriebsnabe 48 mit einer nicht dargestellten Abtriebswelle, beispielsweise einer Getriebeeingangswelle, zur gemeinsamen Drehung zu koppeln. Die Primärseite 42 und die Sekundärseite 46 sind über eine Dämpferfederelementenanordnung 50 zur Drehmomentübertragung gekoppelt.

Ein Kolbenelement 52 unterteilt den Innenraum 26 der Gehäuseanordnung 12 in einen ersten Teilraum 54 und einen zweiten Teilraum 56. Im ersten Teilraum 54 sind die Reibelemente 30, 36 der beiden Gruppen 32, 38 von Reibelementen angeordnet, ebenso wie die Torsionsschwingungsdämpferanordnung 44. Durch nicht weiter dargestellte Fluidströmungskanäle kann durch die bereits angesprochene Fluidförderpumpe Fluid in den ersten Teilraum 54 geleitet werden, so dass es um die Reibelemente 30, 36 zirkuliert und ggf. nach Erwärmung dann aus dem ersten Teilraum 54 wieder abgezogen wird. Über einen oder mehrere Kanäle 58 kann über eine beispielsweise zentral in der Abtriebswelle vorgesehene Öffnung zugeführtes Fluid in den zweiten Teilraum 56 geleitet werden. Bei Fluiddruckerhöhung im zweiten Teilraum 56 bezüglich des im ersten Teilraum 54 vorherrschenden Fluiddrucks wird eine Einrückkraft erzeugt, so dass das Kolbenelement 52 in Richtung der Drehachse A verschoben wird und somit die alternierend angeordneten Reibelemente 30 und 36 der beiden Gruppen 32, 38 von Reibelementen gegeneinander presst. Auf diese Art und Weise wird ein Einrückzustand erzeugt, wobei in Abhängigkeit von der erzeugten Einrückkraft mehr oder weniger Schlupf zwischen den beiden Gruppen 32 und 38 von Reibelementen zugelassen ist.

Um bei der Durchführung derartiger Betätigungsvorgänge eine höhere Präzision bei der Einstellung der Position des Kolbenelements 56 bzw. des über die Reibungskupplung zu übertragenden Drehmoments erreichen zu können, ist dem Kolbenelement eine Rückstellanordnung 60 zugeordnet. Diese erzeugt eine der bereits angesprochenen Einrückkraft entgegenwirkende Rückstellkraft, also eine Kraft, die das Kolbenelement in Richtung von den Reibelementen 30, 36 weg beaufschlagt.

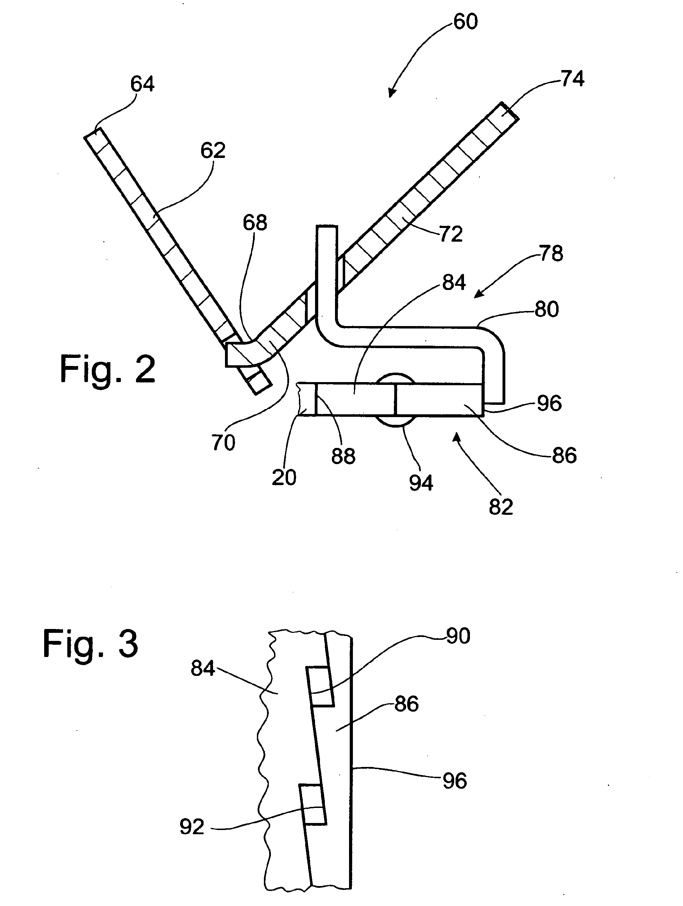

Diese Rückstellanordnung 60 ist in der Fig. 2 detaillierter dargestellt und wird nachfolgend auch mit Bezug auf die Fig. 2 beschrieben.

Man erkennt eine beispielsweise als Tellerfeder ausgebildete Rückstellfeder 62, die sich in ihrem radial äußeren Bereich 64 am Kolbenelement 52 abstützt und somit dieses in Richtung Ausrücken beaufschlagt. Im radial inneren Bereich 66 ist die Rückstellfeder 62 an einem Abstützbereich 68 abgestützt, der am radial inneren Bereich 70 einer beispielsweise als Tellerfeder ausgebildeten Rückstellfeder 72 vorgesehen ist. Mit ihrem radial äußeren Bereich 74 ist die Sensorfeder 72 an einer axial im Wesentlichen nicht bewegbaren Baugruppe abgestützt. Man erkennt, dass bei der in Fig. 1 dargestellten Ausgestaltungsform an der Gehäusenabe 20 ein z.B. ringartiges Abstützelement 76 vorgesehen ist, über welches die Abstützwirkung bezüglich der Gehäusenabe 20 und somit bezüglich der Gehäuseanordnung 12 erfolgt.

Wird durch Erhöhung des Fluiddrucks im ersten Teilraum 56 eine Einrückkraft erzeugt, so erfolgt die axiale Verschiebung des Kolbenelements 52 zunächst unter axialer Belastung bzw. Kompression der Rückstellfeder 62. Da die Sensorfeder 72 unter Vorspannung eingebaut ist, und zwar derart, dass die durch diese erzeugte Vorspannkraft größer oder gleich ist, als die im normalen Betätigungsbereich des Kolbenelements 52 von der Rückstellfeder 62 auf die Sensorfeder 72 ausgeübte Kraft, wird bei derartiger Verschiebung dies. Kolbenelements 52 zwischen einer Positionierung, welche einer ausgerückten Reibungskupplung 10 entspricht, und einer Positionierung, welche einer eingerückten Reibungskupplung 10 entspricht, die Sensorfeder 72 praktisch nicht komprimiert werden. Da also in diesem Zustand die durch die Sensorfeder 72 erzeugte Vorspannkraft immer größer sein wird, als die durch die Rückstellfeder 62 erzeugte Kraft, ist der Sensorfeder 72 eine allgemein mit 78 bezeichnete Vorspannhalteanordnung zugeordnet. Diese umfasst ein Vorspannhalteelement 80, das über eine Verschleißkompensationsanordnung 82 axial bezüglich des Gehäuses 12 bzw. bezüglich der Gehäusenabe 20 abgestützt ist. Somit ist also die Sensorfeder 72 in ihrem Vorspannzustand gehalten zwischen dem Vorspannhalteelement 80 und dem Abstützelement 76. Die Verschleißnachstellvorrichtung 82 umfasst im dargestellten Beispiel zwei ringartig ausgebildete Nachstellelemente 84, 86. Zumindest eines der beiden Nachstellelemente 84, 86 ist bezüglich der Gehäusenabe 20 drehbar. Es sei im Folgenden angenommen, dass das Nachstellelement 84 an der Gehäusenabe 20 sowohl drehfest gehalten ist, als auch axial abgestützt ist, beispielsweise durch eine in Fig. 1 erkennbare Stufe 88. Die beiden Nachstellelemente 84, 86 weisen an ihren einander zugewandt liegenden Seiten jeweilige Rampenflächenbereiche 90, 92 auf. Eine an sich mögliche Drehung des Nachstellelements 86 um die Drehachse A derart, dass dieses in der Darstellung der Fig. 3 sich nach unten bewegt, führt dazu, dass die axiale Länge der Verschleißkompensationsanordnung 82, also insbesondere der die beiden Nachstellelemente 84, 86 umfassenden Baugruppe, zunimmt.

Die Verschleißnachstellvorrichtung 82 umfasst zumindest eine Vorspannfeder 94, welche dasjenige der Nachstellelemente 84, 86, das in Umfangsrichtung bewegbar ist, beaufschlagt, beispielsweise direkt zwischen den beiden Nachstellelementen 84, 86 wirkt, die selbstverständlich auch beide, dann in entgegengesetzter Richtung, in Umfangsrichtung bewegbar sein können. Dies bedeutet, dass durch die unter Vorspannung eingebaute Vorspannfeder 94 grundsätzlich die beiden Nachstellelemente 84, 86 zur Drehung bezüglich einander vorgespannt sind, so dass tatsächlich beide bzw. dasjenige der Nachstellelemente, das in Umfangsrichtung bewegbar ist, in Richtung einer Nachstellbewegung, also einer Drehbewegung vorgespannt ist, welche dann eine entsprechende Axialverlagerung derjenigen Oberfläche 96 erzeugt, an welcher das Vorspannhalteelement 80 axial abgestützt ist.

Es sei hier weiter noch darauf hingewiesen, dass selbstverständlich nicht an beiden Nachstellelementen 84, 86 Rampenflächen 90, 92 vorgesehen sein müssen. Tatsächlich reicht eine derartige Formation an einem der beiden Nachstellelemente aus. Weiter ist es selbstverständlich möglich, dass eines der Nachstellelemente, beispielsweise das Nachstellelement 84, einen integralen Bestandteil der Gehäusenabe 20 bilden kann.

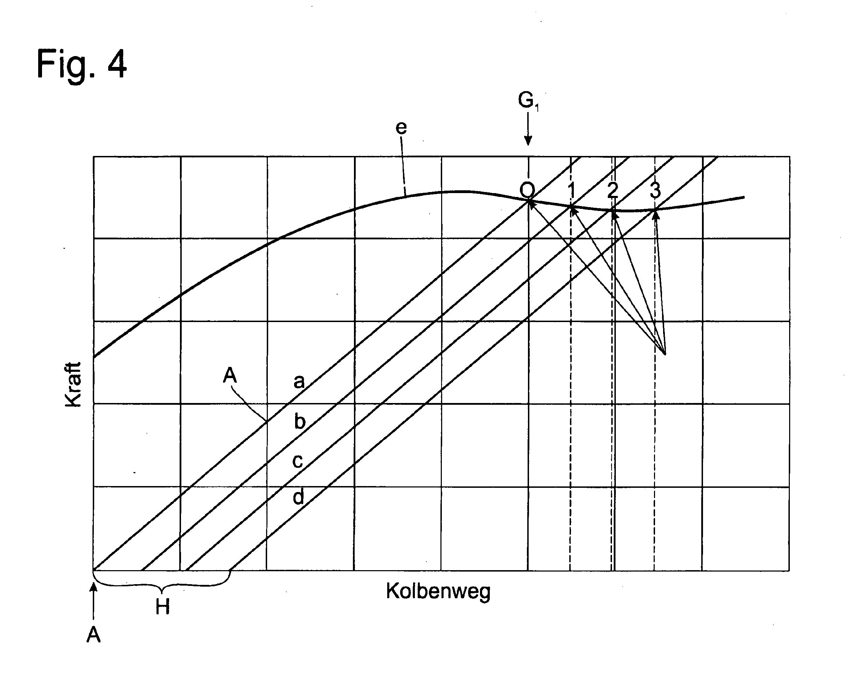

Die Funktionsweise der Rückstellkrafterzeugungsanordnung 60 wird im Folgenden auch unter Bezugnahme auf das Diagramm der Fig. 4 gezeigt. Dabei repräsentieren die Federkennlinien a bis d jeweils die aufgetragen über dem Kolbenweg, also dem Axialhub des Kolbenelements 52, erzeugte Kraft der Rückstellfeder 62, wobei die Zustände a, b, c bzw. d verschiedene Verschleißzustände der Reibelemente 30, 36 repräsentieren, die ggf. auch Reibbeläge tragen können. Die Kennlinie e repräsentiert die durch die Sensorfeder 72 bereitgestellte Kraft. Dabei ist im Neuzustand der Reibungskupplung beispielsweise die Einbaulage derart, dass die zwischen dem Vorspannhalteelement 80 und dem Abstützelement 76 eingespannt gehaltene Sensorfeder 72 eine dem Punkt 0 bzw. G, entsprechende Vorspannkraft erzeugt. Weiter sei angenommen, dass der in Fig. 4 links unten erkennbare Kolbenweg A für einen Neuzustand den Anfang des Kolbenwegs repräsentiert. Dies kann derjenige Zustand sein, ab welchem bei weiterer Belastung die Rückstellfeder 62 beginnt, eine Rückstellkraft zu erzeugen.

Wird durch Fluiddruckerhöhung im zweiten Teilraum 56 dann eine Einrückkraft erzeugt, so bewegt sich das Kolbenelement 52 axial unter zunehmender Belastung bzw. Spannung der Rückstellfeder 62. Diese bewegt sich dabei entlang der Kennlinie a, wobei jedoch der in Fig. 4 mit G₁ bezeichnete Gleichgewichtszustand auch bei vollständig eingerückter Reibungskupplung im unverschlissenen Zustand nicht erreicht wird.

Tritt ein Verschleiß der Reibelemente 30, 32 auf, so bedeutet dies, dass das Kolbenelement 52 auch weiter bewegt werden muss, um beispielsweise den vollständig eingerückten Zustand zu erlangen. Dies bedeutet, dass bei einer bestimmten Verschleißgrenze der Kolben so weit verschoben wird, dass der Zustand erreicht wird, in welchem ein Gleichgewicht zwischen den Kräften der Rückstellfeder 62 und der Sensorfeder 72 vorhanden ist, was also dem Zustand G₁ bzw. 0 in Fig. 4 entspricht. Eine dann noch weiter gehende axiale Verschiebung des Kolbens 52 führt dazu, dass die durch die Rückstellfeder 62 erzeugte Kraft die Vorspannkraft der Sensorfeder 72 übersteigt und mithin die Sensorfeder 72 stärker gespannt bzw. komprimiert wird. Dies bedeutet, dass die zunächst über das Vorspannhalteelement 80 auf die Verschleißnachstellanordnung 82 ausgeübte Arretierwirkung aufgehoben wird, da das Vorspannhalteelement 80 in diesem Zustand nicht mehr durch die Sensorfeder 72 belastet ist. Mangels weiter vorhandener Arretierfunktion wird es nunmehr möglich, dass die beiden Nachstellelemente 84, 86 sich in Umfangsrichtung bezüglich einander bewegen, erzwungen durch die Vorspannkraft der Vorspannfeder 94. D.h., bei Dreharretierung des Nachstellelements 84 wird das Nachstellelement 86 sich in Umfangsrichtung bewegen, was zu einer entsprechenden axialen Verlagerung der Abstützfläche 96 führt. Diese Bewegung kann so lange fortgesetzt werden, bis das Vorspannhalteelement 80 wieder axial durch die Sensorfeder 72 blockiert ist und somit auch eine weitere axiale Bewegung des Nachstellelements 86, induziert durch die Drehbewegung derselben, nicht mehr möglich ist. Bei einem nachfolgend dann durchzuführenden Ausrückvorgang gibt die Rückstellfeder 62 dann ihre Belastung der Sensorfeder 72 allmählich auf, wobei diese sich jedoch axial nicht mehr entspannen kann, da das Vorspannhalteelement 80 nunmehr durch die Verschleißnachstellanordnung 82 an einer weiteren axialen Rückstellbewegung gehindert ist. Dies bedeutet also, dass durch die zuvor durch die Rückstellfeder 62 auf die Sensorfeder 72 ausgeübte Belastung der Abstützbereich 68 für die Rückstellfeder 62 sich axial bewegt hat und nunmehr, bedingt durch die stärkere Vorspannung der Sensorfeder 72, an anderer axialer Positionierung liegt, als in dem zuvor vorhandenen nicht mit Verschleiß behafteten oder mit geringerem Verschleiß behafteten Zustand.

Durch diese axiale Verlagerung des Abstützbereichs 68 ist also eine Anpassung der Einbaulage der Rückstellfeder 62 an den im Bereich der Reibelemente 30, 36 aufgetretenen Verschleiß erfolgt. Dies bedeutet, dass im vollständig eingerückten Zustand die Rückstellfeder 62 wieder näherungsweise die gleiche Rückstellkraft erzeugt, wie dies in einem nicht mit Verschleiß behafteten oder mit weniger Verschleiß behafteten Zustand zuvor der Fall war. Erkennbar wird dies in der Fig. 4 durch den Übergang zu den Kennlinien b bzw. c und d, die zunehmend mit Verschleiß behafteten Zuständen entsprechen. Immer dann, wenn die Rückstellfeder 62 sich entlang einer der Kennlinien bewegt und einer der Kräftegleichgewichtszustände 1, 2 oder 3 erreicht ist, wird die Sensorfeder 72 in einen stärker vorgespannten Zustand gebracht, was letztendlich einem stärker axial komprimierten Zustand entspricht, der eine entsprechende Axialverlagerung des Abstützbereichs 68 mit sich bringt.

Dabei erkennt man in Fig. 4, dass, bedingt durch die konstruktive Auslegung der Sensorfeder 72 als Tellerfeder und dem grundsätzlich vorgespannten Einbau derselben dafür gesorgt ist, dass in dem gesamten Bereich H, in welchem verschleißbedingt die Rückstellfeder 62 bzw. deren Kennlinie sich bezüglich des Kolbenwegs verschieben kann, die Tellerfeder 72 eine näherungsweise gleich bleibende Vorspannkraft bereitstellt. Diese variiert nur gering und kann mit zunehmender Vorspannung, also zunehmender axialer Kompression der Sensorfeder 72, sogar abnehmen. Durch diese näherungsweise konstante Vorspannkraft der Sensorfeder 72 ist dafür gesorgt, dass die Nachstellcharakteristik der Rückstellanordnung 60 über die Betriebslebensdauer hinweg näherungsweise gleich bleibt.

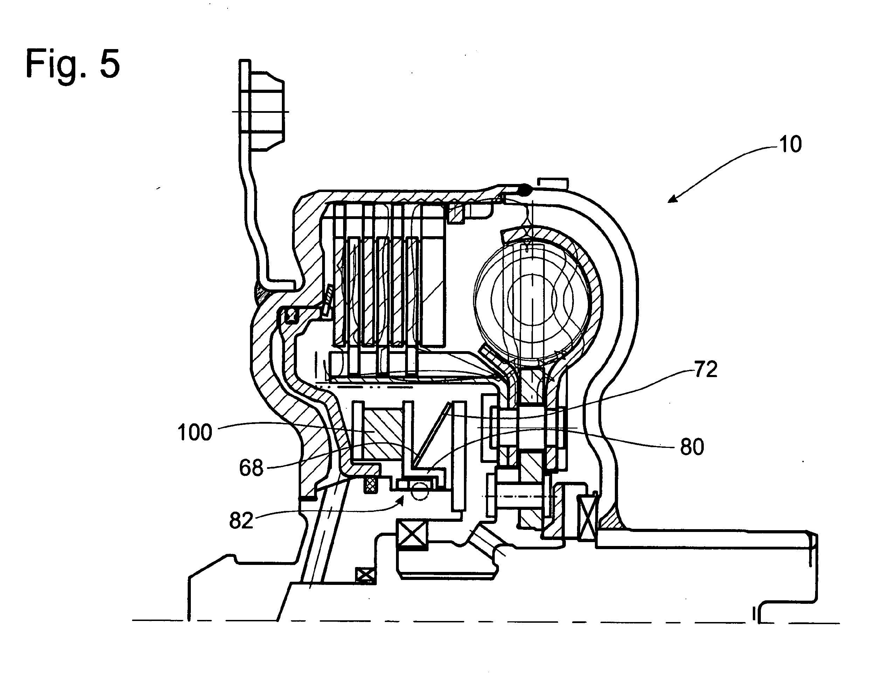

Eine abgewandelte Ausgestaltungsform ist in Fig. 5 gezeigt. Man erkennt hier in symbolartiger Darstellung eine oder mehrere in Umfangsrichtung verteilt liegende Schraubendruckfedern 100, welche die Funktionalität der Rückstellfeder 62 der vorangehend beschriebenen Ausgestaltungsform übernehmen. Das Vorspannhalteelement 80, an welchem die Sensorfeder 72 axial abgestützt ist, bildet nunmehr auch das Widerlager für diese Schraubendruckfedern 100. Bei zunehmender Belastung der Schraubendruckfedern 100 wird nunmehr die durch diese ausgeübte Kraft über das Vorspannhalteelement 80 auf die Sensorfeder 72 übertragen und bei Erreichen bzw. Überschreiten des jeweiligen Kräftegleichgewichts dann die Sensorfeder 72 stärker komprimiert, so dass durch die Wirkung der Verschleißnachstellanordnung 82 wieder der Übergang in einen stärker vorgespannten Zustand erzwungen wird. Ansonsten entspricht die Funktion und auch die Nachstellcharakteristik der vorangehend beschriebenen. Auch der sonstige Aufbau der Reibungskupplung 10 entspricht dem vorangehend Beschriebenen.

## Patentansprüche

1. Reibungskupplung für den Antriebsstrang eines Fahrzeugs, umfassend eine mit einem Antriebsorgan zur gemeinsamen Drehung um eine Drehachse (A) zu koppelnde und wenigstens teilweise oder/und zeitweise mit Fluid gefüllte oder füllbare Gehäuseanordnung (12), eine erste Gruppe (32) von Reibelementen, welche vermittels eines ersten Reibelemententrägers (28) mit der Gehäuseanordnung (12) zur gemeinsamen Drehung um die Drehachse (A) gekoppelt sind, eine zweite Gruppe (38) von Reibelementen, welche durch ein Kolbenelement (52) in Reibeingriff mit den Reibelementen (30) der ersten Gruppe (32) von Reibelementen bringbar sind und vermittels eines zweiten Reibelemententrägers (40) mit einem Abtriebsorgan zur gemeinsamen Drehung um die Drehachse (A) zu koppeln sind, wobei durch das Kolbenelement (52) der Innenraum (26) der Gehäuseanordnung (12) in einen ersten Teilraum (54), welcher die beiden Gruppen (32, 38) von Reibelementen enthält, und einen zweiten Teilraum (56) unterteilt ist, in welchem der Fluiddruck im Vergleich zum Fluiddruck im ersten Teilraum (54) zu erhöhen ist, um zur Herstellung des Reibeingriffs der Reibelemente (30, 36) der beiden Gruppen (32, 38) von Reibelementen eine das Kolbenelement (52) beaufschlagende Einrückkraft zu erzeugen, wobei dem Kolbenelement (52) eine Rückstellanordnung (60) zugeordnet ist, die eine Rückstellfederanordnung (62; 100) umfasst, um eine das Kolbenelement (52) in Richtung Aufheben des Reibeingriffs der Reibelemente (30, 36) der beiden Gruppen (32, 38) von Reibelementen beaufschlagende und der Einrückkraft entgegenwirkende Rückstellkraft zu erzeugen, und mit einer Sensorfederanordnung (72), wobei die Rückstellanordnung (60) eine Verschleißkompensationsanordnung (82) umfasst,
**dadurch gekennzeichnet, dass**
die Verschleißkompensationsanordnung (82) zur Bereitstellung einer von einem Verschleißzustand der Reibelemente (30, 36) im Wesentlichen unabhängigen Rückstellkraft für das Kolbenelement (52) dient, indem die Rückstellfederanordnung (62; 100) bezüglich des Kolbenelements (52) und bezüglich der Sensorfederanordnung (72) abgestützt ist, wobei die Sensorfederanordnung (72) bezüglich einer in Richtung der Drehachse (A) im Wesentlichen nicht bewegbaren Abstützbaugruppe (76, 20) abgestützt ist und einen Abstützbereich (68) für die Rückstellfederanordnung (62; 100) aufweist, dessen Positionierung in Richtung der Drehachse (A) in Abhängigkeit von einem Vorspannzustand der Sensorfederanordnung (72) veränderbar ist, so dass bei Veränderung des Vorspannzustandes der Sensorfederanordnung (72) in Richtung stärkere Vorspannung der Abstützbereich (68) für die Rückstellfederanordnung (62; 100) sich in Richtung geringere Vorspannung der Rückstellfederanordnung (62; 100) verlagert.

2. Reibungskupplung nach Anspruch 1, bei welcher die Vorspannhalteanordnung (80, 82) die Verschleißnachstellanordnung (82) umfasst mit wenigstens einem bei Überschreiten der in einen jeweiligen Vorspannzustand der Sensorfederanordnung (72) durch diese erzeugten Vorspannkraft in einer Nachstellrichtung verlagerbaren Nachstellelement (84, 86), wobei an dem Nachstellelement (84, 86) ein die Sensorfederanordnung (72) in ihrem Vorspannzustand haltendes Vorspannhalteelement (80) abgestützt ist, wobei bei Verlagerung des Nachstellelements (84, 86) in der Nachstellrichtung das Vorspannhalteelement (80) sich in Richtung stärkere Vorspannung der Sensorfederanordnung (72) verlagert,
**dadurch gekennzeichnet, dass**
wenigstens ein Nachstellelement (84, 86) eine Rampenanordnung (90, 92) umfasst, mit welcher es bei Durchführung eines Nachstellvorgangs bezüglich eines weiteren Nachstellelements (84, 86) verlagerbar ist, so dass das das Vorspannhalteelement (80) abstützende Nachstellelement (86) sich in Richtung der Drehachse (A) verlagert.

3. Reibungskupplung nach Anspruch 1,
**dadurch gekennzeichnet, dass** der Abstützbereich (68) sich bezüglich des Kolbenelements (52) in einer Richtung bewegt, in welche dieses sich zur Herstellung des Reibeingriffs der Reibelemente (30, 36) der beiden Gruppen (32, 38) von Reibelementen bewegt.

4. Reibungskupplung nach Anspruch 2,
**dadurch gekennzeichnet, dass** das zur Durchführung eines Nachstellvorgangs sich verlagernde Nachstellelement (86) in Richtung Nachstellbewegung vorgespannt ist.

5. Reibungskupplung nach einem der Ansprüche 1 bis 4,
**dadurch gekennzeichnet, dass** die Sensorfederanordnung (72) zwischen einem Zustand minimaler Vorspannung und einem Zustand maximaler Vorspannung eine im Wesentlichen konstante Vorspannkraft bereitstellt.

6. Reibungskupplung nach Anspruch 5,
**dadurch gekennzeichnet, dass** die Vorspannkraft der Sensorfederanordnung (72) weniger als 20%, vorzugsweise weniger als 10%, variiert.

7. Reibungskupplung nach einem der Ansprüche 1 bis 6,
**dadurch gekennzeichnet, dass** die Sensorfederanordnung (72) eine Tellerfeder (72) umfasst.

8. Reibungskupplung nach einem der Ansprüche 1 bis 7,
**dadurch gekennzeichnet, dass** die Rückstellfederanordnung (62) eine Tellerfeder (62) umfasst.

## Claims

1. Friction clutch for the drivetrain of a vehicle, comprising a housing arrangement (12), which is or can be at least partially and/or intermittently filled with fluid, for coupling to a drive input member for conjoint rotation about an axis of rotation (A), a first group (32) of friction elements which are coupled by means of a first friction element carrier (28) to the housing arrangement (12) for conjoint rotation about the axis of rotation (A), a second group (38) of friction elements which can be placed in frictional engagement with the friction elements (30) of the first group (32) of friction elements by a piston element (52) and which are provided for coupling to a drive output member for conjoint rotation about the axis of rotation (A) by means of a second friction element carrier (40), wherein the interior space (26) of the housing arrangement (12) is divided by the piston element (52) into a first partial space (54) which contains the two groups (32, 38) of friction elements and a second partial space (56) in which the fluid pressure is to be increased in relation to the fluid pressure in the first partial space (54) in order to generate the engagement force which loads the piston element (52) in order to produce the frictional engagement between the friction elements (30, 36) of the two groups (32, 38) of friction elements, wherein the piston element (52) is assigned a restoring arrangement (60), which comprises a restoring spring arrangement (62; 100), for the purpose of generating a restoring force which loads the piston element (52) in a direction for eliminating the frictional engagement of the friction elements (30, 36) of the two groups (32, 38) of friction elements and which opposes the engagement force, and having a sensor spring arrangement (72), wherein the restoring arrangement (60) comprises a wear compensation arrangement (82),
**characterized in that**
the wear compensation arrangement (82) serves to provide a restoring force, which is substantially independent of a wear state of the friction elements (30, 36), for the piston element (52) by virtue of the restoring spring arrangement (62; 100) being supported with respect to the piston element (52) and with respect to the sensor spring arrangement (72), wherein the sensor spring arrangement (72) is supported with respect to a support assembly (76, 20) which is substantially immovable in the direction of the axis of rotation (A) and said sensor spring arrangement has a support region (68) for the restoring spring arrangement (62; 100), the position of which support region in the direction of the axis of rotation (A) can be varied as a function of a preload state of the sensor spring arrangement (72) such that, in the event of a change in the preload state of the sensor spring arrangement (72) towards more intense preload, the support region (68) for the restoring spring arrangement (62; 100) is displaced in a direction for reduced preload of the restoring spring arrangement (62; 100).

2. Friction clutch according to Claim 1, in which the preload holding arrangement (80, 82) comprises the wear adjustment arrangement (82) with at least one adjusting element (84, 86) which, in the event of an exceedance of the preload force generated by the sensor spring arrangement (72) in a respective preload state of the latter, can be displaced in an adjusting direction, wherein a preload holding element (80) which holds the sensor spring arrangement (72) in its preload state is supported on the adjusting element (84, 86), wherein in the event of a displacement of the adjusting element (84, 86) in the adjusting direction, the preload holding element (80) is displaced in a direction for more intense preload of the sensor spring arrangement (72),
**characterized in that**
at least one adjusting element (84, 86) comprises a ramp arrangement (90, 92) by means of which said adjusting element, during the execution of an adjusting process, can be displaced with respect to a further adjusting element (84, 86) such that the adjusting element (86) which supports the preload holding element (80) is displaced in the direction of the axis of rotation (A).

3. Friction clutch according to Claim 1, **characterized in that** the support region (68) moves with respect to the piston element (52) in a direction in which said piston element moves in order to produce the frictional engagement of the friction elements (30, 36) of the two groups (32, 38) of friction elements.

4. Friction clutch according to Claim 2, **characterized in that** the adjusting element (86), which is displaced for the execution of an adjusting process, is preloaded in the direction of an adjusting movement.

5. Friction clutch according to one of Claims 1 to 4, **characterized in that** the sensor spring arrangement (72) provides a substantially constant preload force between a state of minimum preload and a state of maximum preload.

6. Friction clutch according to Claim 5, **characterized in that** the preload force of the sensor spring arrangement (72) varies by less than 20%, preferably less than 10%.

7. Friction clutch according to one of Claims 1 to 6, **characterized in that** the sensor spring arrangement (72) comprises a plate spring (72).

8. Friction clutch according to one of Claims 1 to 7, **characterized in that** the restoring spring arrangement (62) comprises a plate spring (62).

## Revendications

1. Embrayage à friction pour la chaîne cinématique d'un véhicule, comprenant un agencement de carter (12) rempli ou pouvant être rempli au moins partiellement et/ou temporairement de fluide et à coupler avec un organe d'entraînement pour la rotation commune autour d'un axe de rotation (A), un premier groupe (32) d'éléments de friction, qui sont couplés à l'agencement de carter (12) au moyen d'un premier support d'éléments de friction (28) pour la rotation commune autour de l'axe de rotation (A), un deuxième groupe (38) d'éléments de friction, qui peuvent être amenés au moyen d'un élément de piston (52) en engagement de friction avec les éléments de friction (30) du premier groupe (32) d'éléments de friction et qui doivent être couplés au moyen d'un deuxième support d'éléments de friction (40) à un organe d'entraînement pour la rotation commune autour de l'axe de rotation (A), dans lequel la chambre intérieure (26) de l'agencement de carter (12) est divisée par l'élément de piston (52) en une première chambre partielle (54), qui contient les deux groupes (32, 38) d'éléments de friction, et une deuxième chambre partielle (56), dans laquelle la pression de fluide doit être accrue par rapport à la pression de fluide dans la première chambre partielle (54), afin de produire une force d'embrayage agissant sur l'élément de piston (52) pour la réalisation de l'engagement de friction des éléments de friction (30, 36) des deux groupes (32, 38) d'éléments de friction, dans lequel un agencement de rappel (60) est associé à l'élément de piston (52), lequel comprend un agencement de ressort de rappel (62; 100) pour produire une force de rappel poussant l'élément de piston (52) dans le sens de la séparation de l'engagement de friction des éléments de friction (30, 36) des deux groupes (32, 38) d'éléments de friction et s'opposant à la force d'embrayage, et avec un agencement de ressort de détecteur (72), dans lequel l'agencement de rappel (60) comprend un agencement de compensation d'usure (82), **caractérisé en ce que** l'agencement de compensation d'usure (82) sert à la préparation d'une force de rappel pour l'élément de piston (52) essentiellement indépendante de l'état d'usure des éléments de friction (30, 36), du fait que l'agencement de ressort de rappel (62; 100) est appuyé par rapport à l'élément de piston (52) et par rapport à l'agencement de ressort de détecteur (72), dans lequel l'agencement de ressort de détecteur (72) est appuyé par rapport à un groupe d'appui (76, 20) essentiellement non déplaçable en direction de l'axe de rotation (A) et présente une zone d'appui (68) pour l'agencement de ressort de rappel (62; 100), dont le positionnement peut être modifié en direction de l'axe de rotation (A) en fonction d'un état de précontrainte de l'agencement de ressort de détecteur (72), de telle manière que, lors d'une modification de l'état de précontrainte de l'agencement de ressort de détecteur (72) dans le sens d'une précontrainte plus forte, la zone d'appui (68) pour l'agencement de ressort de rappel (62; 100) se déplace dans le sens d'une précontrainte plus faible de l'agencement de ressort de rappel (62; 100).

2. Embrayage à friction selon la revendication 1, dans lequel l'agencement de maintien de précontrainte (80, 82) comprend l'agencement de rattrapage d'usure (82) avec au moins un élément de rattrapage (84, 86) déplaçable dans un sens de rattrapage en cas de dépassement de la force de précontrainte produite dans un état de précontrainte respectif de l'agencement de ressort de détecteur (72) par ce dernier, dans lequel un élément de maintien de précontrainte (80) maintenant l'agencement de ressort de détecteur (72) dans son état de précontrainte est appuyé sur l'élément de rattrapage (84, 86), dans lequel, lors du déplacement de l'élément de rattrapage (84, 86) dans le sens de rattrapage, l'élément de maintien de précontrainte (80) se déplace dans le sens d'une précontrainte plus forte de l'agencement de ressort de détecteur (72), **caractérisé en ce qu'**au moins un élément de rattrapage (84, 86) comprend un agencement de rampe (90, 92), avec lequel il est déplaçable par rapport à un autre élément de rattrapage (84, 86) lors de l'exécution d'une opération de rattrapage, de telle manière que l'élément de rattrapage (86) soutenant l'élément de maintien de précontrainte (80) se déplace en direction de l'axe de rotation (A).

3. Embrayage à friction selon la revendication 1, **caractérisé en ce que** la zone d'appui (68) se déplace par rapport à l'élément de piston (52) dans une direction dans laquelle celui-ci se déplace pour la réalisation de l'engagement de friction des éléments de friction (30, 36) des deux groupes (32, 38) d'éléments de friction.

4. Embrayage à friction selon la revendication 2, **caractérisé en ce que** l'élément de rattrapage (86) se déplaçant pour l'exécution d'une opération de rattrapage est précontraint dans le sens du mouvement de rattrapage.

5. Embrayage à friction selon l'une quelconque des revendications 1 à 4, **caractérisé en ce que** l'agencement de ressort de détecteur (72) génère une force de précontrainte essentiellement constante entre un état de précontrainte minimale et un état de précontrainte maximale.

6. Embrayage à friction selon la revendication 5, **caractérisé en ce que** la force de précontrainte de l'agencement de ressort de détecteur (72) varie de moins de 20 %, de préférence de moins de 10 %.

7. Embrayage à friction selon l'une quelconque des revendications 1 à 6, **caractérisé en ce que** l'agencement de ressort de détecteur (72) comprend une rondelle élastique (72).

8. Embrayage à friction selon l'une quelconque des revendications 1 à 7, **caractérisé en ce que** l'agencement de ressort de rappel (62) comprend une rondelle élastique (62).
